# EUROPEAN PATENT APPLICATION

(11) **EP 4 617 867 A1**
(43) Date of publication of application: **17.09.2025**
(21) Application number: 23887836.7
(22) Date of filing: 30.10.2023
(51) Int. Cl.: G06F 9/451, G06F 3/0484, G06F 3/0485

(54) **CONTROL METHOD FOR APPLICATION IN EXTENDED REALITY SPACE, APPARATUS, DEVICE AND MEDIUM**

(30) Priority: 08.11.2022 CN 202211394577
(71) Applicant: Beijing Zitiao Network Technology Co., Ltd., Beijing 100190 (CN)
(72) Inventor: FANG, Chi, Beijing 100028 (CN); WANG, Han, Beijing 100028 (CN); XIAN, Yi, Beijing 100028 (CN)
(74) Representative: Marks & Clerk LLP
(86) International application number: PCT/CN2023/127869
(87) International publication number: WO 2024/099146

(57) **Abstract**

Embodiments of the application provide a control method, apparatus, device, and medium for an application in an extended reality space. The method includes: in response to an opening instruction for an application in an extended reality space, displaying an UI of the application and a first comprehensive control of the application, wherein the first comprehensive control is located outside the UI, the first comprehensive control integrates a plurality of interactive functions of the application, and the first comprehensive control is displayed following the UI; and in response to an operation on the first comprehensive control, controlling the application to perform an interactive function corresponding to the operation. By integrating a plurality of interactive functions of an application into a first comprehensive control outside a UI, the UI of the application becomes more concise, and it is also convenient for a user to operate a control of the UI, thereby enhancing the "sense of immersion" brought to the user by an XR device.

## Description

The present application claims priority to Chinese Patent Application No. 2022113945776, filed on November 8, 2022 and entitled "CONTROL METHOD, APPARATUS, DEVICE, AND MEDIUM FOR AN APPLICATION IN AN EXTENDED REALITY SPACE", the entirety of which is incorporated herein by reference.

### FIELD

Embodiments of the present application relate to the field of electronic device technologies, and in particular, to a control method, apparatus, device, and medium for an application in an extended reality space.

### BACKGROUND

Extended Reality (XR) refers to combining reality and virtuality by using a computer to construct a virtual environment for human-machine interaction. XR is also a collective term for various technologies including Virtual Reality (VR), Augmented Reality (AR), and Mixed Reality (MR). By blending the visual interactive technologies of the three, a "sense of immersion" that seamlessly transitions between a virtual world and the real world is brought to the user.

Currently, in an XR device, there are a plurality of controls displayed on a user interface (UI) of an application, for example, a closing control, a minimizing control, a zoom control, and a screen projection control, or the like, and a user operates the application through these controls.

However, having too many controls on the UI of an application makes the UI unaesthetic, and some controls are inconvenient for users to operate.

### SUMMARY

Provided are a control method, apparatus, device, and medium for an application in an extended reality space. By integrating a plurality of interactive functions of an application into a first comprehensive control outside a UI, the UI of the application becomes more concise and convenient for users to operate a control of the UI.

According to a first aspect, an embodiment of the present application provides a control method for an application in an extended reality space, comprising:
in response to an opening instruction for an application in an extended reality space, displaying a user interface (UI) of the application and a first comprehensive control of the application, wherein the first comprehensive control is located outside the UI, the first comprehensive control integrates a plurality of interactive functions of the application, and the first comprehensive control is displayed following the UI; and
in response to an operation on the first comprehensive control, controlling the application to perform an interactive function corresponding to the operation.

In some embodiments, in response to the operation on the first comprehensive control, controlling the application to perform the interactive function corresponding to the operation comprises:
in response to a first operation on the first comprehensive control, minimizing the UI to a taskbar.

**In** some embodiments, the first operation is a click operation on the first comprehensive control.

**In** some embodiments, in response to the operation on the first comprehensive control, controlling the application to perform the interactive function corresponding to the operation comprises:
in response to a second operation on the first comprehensive control, controlling the UI to move.

**In** some embodiments, in response to the second operation on the first comprehensive control, controlling the UI to move comprises:
in response to a long press operation on the first comprehensive control, controlling the first comprehensive control to switch from a first state to a second state; and
after the first comprehensive control being switched to the second state, in response to a drag operation on the first comprehensive control, controlling the UI to move.

**In** some embodiments, the second operation is a drag operation on the first comprehensive control.

**In** some embodiments, in response to the operation on the first comprehensive control, controlling the application to perform the interactive function corresponding to the operation comprises:
in response to detecting that a cursor moves into a first detection area of the first comprehensive control and hovers for a duration equal to a first duration, displaying a title bar at a predetermined location, wherein the title bar comprises a plurality of controls, and the first detection area at least covers the first comprehensive control.

**In** some embodiments, in response to detecting that the cursor moves into the first detection area of the first comprehensive control and hovers for the duration equal to the first duration, displaying the title bar at the predetermined location comprises:
in response to detecting that the cursor moves into the first detection area and hovers for a duration equal to a second duration, controlling the first comprehensive control to switch from a first state to a second state, the second duration being less than the first duration; and
in response to the first comprehensive control being in the second state and detecting that the hovering duration is equal to the first duration, displaying the title bar at a predetermined location.

**In** some embodiments, the method further comprises:
in response to detecting that the cursor moves out of the first detection area for a duration equal to a third duration, closing the title bar.

**In** some embodiments, the title bar is located in proximity to the first comprehensive control and the method further comprises:
in response to detecting that the cursor moves out of the second detection area for a duration equal to the third duration, closing the title bar, wherein the second detection area covers at least the first comprehensive control and the title bar.

**In** some embodiments, the first state is a downward arrow style and the second state is a horizontal bar style.

**In** some embodiments, in response to the operation on the first comprehensive control, controlling the application to perform the interactive function corresponding to the operation comprises:
in response to a third operation on the first comprehensive control, closing the UI and the application.

**In** some embodiments, in response to the third operation on the first comprehensive control, closing the UI and the application comprises:
in response to the third operation on the first comprehensive control, controlling the first comprehensive control to switch from a first state to a third state, the third state being configured to indicate that the application is about to be closed; and
in response to a duration for which the first comprehensive control is in the third state reaching a fourth duration, closing the UI and the application.

**In** some embodiments, the third operation is a double-click operation.

**In** some embodiments, the first state is a downward arrow style and the third state is a cross style.

**In** some embodiments, the first comprehensive control is a downward arrow style of control.

**In** some embodiments, the UI does not comprise a control, and the first comprehensive control integrates a function of an existing control of the application.

**In** some embodiments, a taskbar and a second comprehensive control of the taskbar are further displayed in the extended reality space, the second comprehensive control is located outside the taskbar, the second comprehensive control integrates a plurality of interactive functions of the taskbar, and the second comprehensive control is displayed following the taskbar, and wherein the method further comprises:
in response to an operation on the second comprehensive control, controlling the taskbar to perform an interactive function corresponding to the operation on the second comprehensive control.

**In** some embodiments, in response to the operation on the second comprehensive control, controlling the taskbar to perform the interactive function corresponding to the operation on the second comprehensive control comprises:
in response to a fourth operation on the second comprehensive control, hiding the taskbar.

**In** some embodiments, the fourth operation is a click operation or a double-click operation on the second comprehensive control.

**In** some embodiments, in response to the fourth operation on the second comprehensive control, hiding the taskbar comprises:
in response to detecting that a cursor moves into a third detection area of the second comprehensive control and hovers for a duration equal to a fifth duration, hiding the taskbar, wherein the third detection area covers at least the second comprehensive control.

**In** some embodiments, in response to the operation on the second comprehensive control, controlling the taskbar to perform the interactive function corresponding to the operation on the second comprehensive control comprises:
in response to a fifth operation on the second comprehensive control, controlling the taskbar to move, or controlling the taskbar to move together with the UI of the application running in the foreground.

**In** some embodiments, in response to the fifth operation on the second comprehensive control, controlling the taskbar to move, or controlling the taskbar to move together with the UI of the application running in the foreground comprises:
in response to a long press operation on the second comprehensive control, controlling the second comprehensive control to switch from a first state to a second state; and
after the second comprehensive control being switched to the second state, in response to a drag operation on the second comprehensive control, controlling the taskbar to move, or controlling the taskbar to move together with the UI of the application running in the foreground.

**In** some embodiments, the second comprehensive control is a downward arrow style of control.

**In** some embodiments, the first state of the second comprehensive control is a downward arrow style, and the second state of the second comprehensive control is a horizontal bar style.

**In** some embodiments, a relative location of the first comprehensive control and the UI remains unchanged.

**In** some embodiments, a relative location of the second comprehensive control and the taskbar remains unchanged.

**In** some embodiments, an embodiment of the present application provides a control apparatus for an application in an extended reality space, comprising:
a displaying module configured to, in response to an opening instruction for an application in an extended reality space, display a user interface (UI) of the application and a first comprehensive control of the application, wherein the first comprehensive control is located outside the UI, the first comprehensive control integrates a plurality of interactive functions of the application, and the first comprehensive control is displayed following the UI; and
a controlling module configured to, in response to an operation on the first comprehensive control, control the application to perform an interactive function corresponding to the operation.

**In** some embodiments, an embodiment of the present application provides an electronic device, comprising:
a processor and a memory, the memory being configured to store a computer program, and the processor being configured to invoke and operate the computer program stored in the memory to perform any of the above methods.

**In** some embodiments, an embodiment of the present application provides a computer-readable storage medium, configured to store a computer program, the computer program causing a computer to perform any of the above methods.

**In** some embodiments, an embodiment of the present application provides a computer program product, comprising a computer program which, when executed by a processor, performs any of the above methods.

The embodiments of the present application provide a control method, apparatus, device, and medium for an application in an extended reality space, and the method comprises: in response to an opening instruction for an application in an extended reality space, displaying a user interface (UI) of the application and a first comprehensive control of the application, wherein the first comprehensive control is located outside the UI, the first comprehensive control integrates a plurality of interactive functions of the application, and the first comprehensive control is displayed following the UI; and in response to an operation on the first comprehensive control, controlling the application to perform an interactive function corresponding to the operation. By integrating a plurality of interactive functions of an application into a first comprehensive control outside a UI, the UI of the application becomes more concise, and it is also convenient for a user to operate a control of the UI, thereby enhancing the "sense of immersion" brought to the user by an XR device.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a control method for an application in an extended reality space according to Embodiment 1 of the present application;
FIG. 2 is a schematic diagram of a UI and a first comprehensive control of an app;
FIG. 3 is another schematic diagram of a UI and a first comprehensive control of an app;
FIG. 4 is a flowchart of a control method for an application in an extended reality space according to Embodiment 2 of the present application;
FIG. 5 is a flowchart of a control method for an application in an extended reality space according to Embodiment 3 of the present application;
FIG. 6 is a schematic diagram of a state change of a first comprehensive control of an app;
FIG. 7 is a flowchart of a control method for an application in an extended reality space according to Embodiment 4 of the present application;
FIG. 8 is a schematic diagram of a first detection area of a first comprehensive control;
FIG. 9 is a schematic diagram of an interface transformation in which a title bar is invoked through a first comprehensive control;
FIG. 10 is a flowchart of a control method for an application in an extended reality space according to Embodiment 5 of the present application;
FIG. 11 is a schematic diagram of an interface transformation of closing an app through a first comprehensive control;
FIG 12 is a flowchart of a control method for an application in an extended reality space according to Embodiment 6 of the present application;
FIG. 13 is a schematic diagram of simultaneous display of an app and a taskbar;
FIG. 14 is a schematic structural diagram of a control apparatus for an application in an extended reality space according to Embodiment 7 of the present application; and
FIG. 15 is a schematic structural diagram of an electronic device according to Embodiment 8 of the present application.

### DETAILED DESCRIPTION

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall belong to the scope of protection of the present invention.

**It** should be noted that terms such as "first" and "second" in the specification, claims, and the accompanying drawings of the present invention are used to distinguish similar objects, but are not necessarily used to describe a specific sequence or order. It should be understood that the data so used may be interchanged where appropriate so that the embodiments of the invention described herein can be implemented in sequences other than those illustrated or described herein. Furthermore, the terms "include", "comprise" and "have" and any variations thereof, are intended to cover a non-exclusive inclusion, for example, a process, a method, a system, a product, or a server that includes a series of steps or units is not necessarily limited to those expressly listed, but may include other steps or units not expressly listed or inherent to such process, method, product or device.

The present application is applicable to a human-machine interaction scenario. In practical use, a user often needs to interact with a virtual space provided by an electronic device. The virtual space may be understood as a virtual scenario, which is a virtual scenario displayed (or provided) when an application runs on an electronic device. The virtual scenario may be a real-world simulation environment, a semi-simulated semi-fictional virtual scenario, or a purely fictional virtual scenario.

How to interact with the virtual space becomes a problem to be solved urgently at present. Therefore, the present application designs a control method for an application in an extended reality space, to solve the problem of interaction between a user and an application in a virtual space by means of the method.

**In** order to facilitate understanding of the embodiments of the present application, before describing the embodiments of the present application, some concepts involved in all the embodiments of the present application are first explained and illustrated appropriately, specifically as follows:
1) Virtual Reality (VR), technology for creating and experiencing a virtual world, and determining and generating a virtual environment, is multi-source information (the Virtual Reality mentioned in the present disclosure at least comprises visual perception, and may further comprise auditory perception, tactile perception, and motion perception, and even further comprises taste perception, smell perception, or the like), to realize fusion and interactive simulation of a three-dimensional dynamic view and a physical behavior of the virtual environment. In this way, a user is immersed in a simulated virtual reality environment, thereby implementing an application of various virtual environments, such as a map, a game, a video, education, a medicine, a simulation, collaborative training, sales, assistance in manufacturing, maintenance, and repair.
2) A Virtual Reality device (VR device), and a terminal for realizing a Virtual Reality effect. Generally, the VR device may be provided in a form of glasses, a Head Mount Display (HMD), and contact lenses, to realize visual perception and perception in other forms. Certainly, the form of realization of the Virtual Reality device is not limited thereto and may be further miniaturized or enlarged according to an actual requirement.

Alternatively, the Virtual Reality device described in the embodiments of the present application may include, but is not limited to, the following types:
2.1) A computer-end virtual reality (PCVR) device, which uses a PC end to perform related computation of a virtual reality function and data output; and an external computer-end virtual reality device uses data output by the PC end to realize an effect of virtual reality.
2.2) A mobile virtual reality device, which supports setting up a mobile terminal (such as a smartphone) in various manners (such as a Head Mount Display with a dedicated card slot), performing related computation of a virtual reality function by the mobile terminal through a wired or wireless connection with the mobile terminal, and outputting data to the mobile virtual reality device, such as viewing a virtual reality video through an APP of the mobile terminal.
2.3) An all-in-one virtual reality device, having a processor for performing a related computation for a virtual function, thus having independent virtual reality input and output functions, without needing to be connected to a PC end or a mobile terminal, and having a high degree of freedom in use.
3) Mixed Reality (MR) refers to creating a new environment and visualization in combination with real world and virtual world, where a physical entity and a digital object coexist and can interact in real time, so as to simulate a real object. Reality, augmented reality, augmented virtual, and virtual reality technology are mixed. MR is a synthetic mixed reality (MR) of virtual reality (VR) plus augmented reality (AR) and is an extension of virtual reality (VR) technology. By means of a method for displaying a virtual scenario in a real scenario, a sense of reality in user experience may be improved. The MR field relates to computer vision, which is science for studying how to enable a machine to "see". Furthermore, it refers to that a camera and a computer perform machine vision, such as target recognition, tracking, and measurement in place of human eyes, and further perform image processing to transform an image to be more suitable for human observation or transmission to an instrument for detection.

That is, the MR is a simulated scenery in which a computer-created sensory input (for example, a virtual object) is integrated with a sensory input from a physical scenery or a representation thereof. In some MR sceneries, the computer-created sensory input may adapt to a change in the sensory input from the physical scenery. Additionally, some electronic systems for displaying the MR scenery may monitor an orientation and/or location relative to the physical scenery to enable a virtual object to interact with a real object (that is, a physical element or a representation thereof from the physical scenery). For example, the system may monitor motion such that a virtual plant appears stationary relative to a physical building.

After some concepts involved in the embodiments of the present application are introduced, a control method for an application provided in the embodiments of the present application is specifically described below with reference to the accompanying drawings. For the same content, reference is made to the description in the foregoing embodiments, and the description is not repeated.

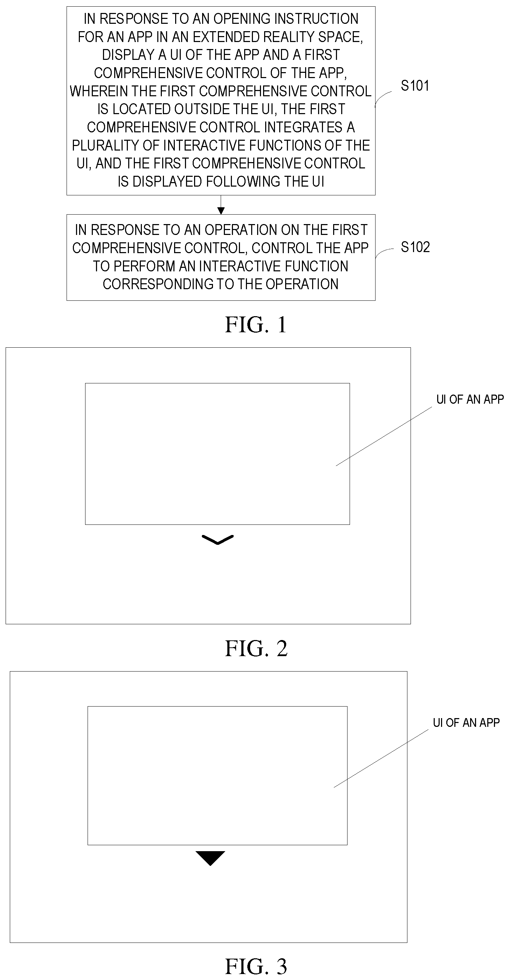

FIG. 1 is a flowchart of a control method for an application in an extended reality space according to Embodiment 1 of the present application. The embodiments of the present application are applicable to a human-machine interaction scenario, and the control method for the application may be performed by a control apparatus for an application. The apparatus may be composed of hardware and/or software and may be integrated into an electronic device. In the embodiments of the present application, the electronic device may be any hardware device capable of providing an extended reality space. For example, the electronic device is an XR device such as a VR device, an AR device, or an MR device, which is not specifically limited in the present application. In consideration that principles implemented by different types of electronic devices are the same, for ease of description, a case in which the electronic device is a VR device is used as an example in the following embodiments for detailed description.

As shown in FIG. 1, the control method for an application in an extended reality space comprises the following steps.

S101. In response to an opening instruction for an application in an extended reality space, a UI of the application and a first comprehensive control of the application are displayed, wherein the first comprehensive control is located outside the UI, the first comprehensive control integrates a plurality of interactive functions of the UI, and the first comprehensive control is displayed following the UI.

**In** the extended reality space, a user opens an application (app), and the user may open the app in various manners. Manner 1: on a home interface of a VR device, a user opens an app by clicking an icon of the app. Manner 2: an app runs in the background, and an icon of the app is displayed in a taskbar for the interface. A user opens the app by clicking the icon of the app in the taskbar.

A user opens an app in any manner, and UI of the app and the first comprehensive control of the app are displayed in the extended reality space. Unlike the prior art, the first comprehensive control is located outside the UI of the app and is displayed independently of the UI of the app. In the prior art, controls of an app are all displayed in an interface of a UI, for example, located at an upper left corner, an upper right corner, a lower left corner, a lower right corner, or middle of the bottom of the UI. Generally, the location of a setting of a control does not obscure a main interface of the UI, avoiding blocking the content of the main interface and affecting the viewing or operation of a user.

The first comprehensive control is configured to operate the UI, and the first comprehensive control integrates a plurality of interactive functions of the UI, or it may be understood that the first comprehensive control is configured to trigger a plurality of interactive functions of the UI. The interactive function includes, but is not limited to minimizing the UI, closing the app, controlling the UI to move, controlling the UI to zoom, controlling content playing within the UI to pause, fast forward, switch, close or adjust volume, controlling app screen projection, or the like. It can be understood that different apps have different interactive functions, and therefore, the functions of the first comprehensive control of different apps may be different.

The first comprehensive control is displayed following the UI, that is, the first comprehensive control is not displayed separately. The first comprehensive control is different from some virtual objects in the extended reality space and can be displayed and operated independently. The first comprehensive control is displayed only when the UI of the app is displayed, and the first comprehensive control is not displayed when the app is closed or the UI is minimized.

**It** should be noted that the first comprehensive control is different from a traditional control panel. The traditional control panel is generally provided with a plurality of controls, and a user controls an app by operating the plurality of controls. Alternatively, although a traditional control panel does not have a control, different control functions are realized through different areas on the panel. Each area has different functions, and each area is equivalent to a control. In comprehensive terms, a traditional control panel is equivalent to having a plurality of operable points (each operable point corresponds to a control or area). However, in the embodiments of the present application, the first comprehensive control is not provided with other controls and different areas of the first comprehensive control cannot be operated, that is, the first comprehensive control has only one operable point.

Alternatively, the number of the first comprehensive controls may be one or more. For example, the UI has one first comprehensive control, and the first comprehensive control integrates a plurality of interactive functions of the UI.

**In** an implementation, a plurality of interactive functions integrated by the first comprehensive control respectively correspond to a plurality of controls, and each interactive function corresponds to an existing control; in the implementation, a commonly used control of an app is integrated in the first comprehensive control; and the commonly used control of a UI comprises a minimizing control, a maximizing control, a closing control, a pause control, and a volume adjustment control.

Alternatively, a UI of an app does not include a control, and the first comprehensive control integrates a function of an existing control of the app.

**In** another implementation, among a plurality of interactive functions integrated by the first comprehensive control, a part of the interactive functions respectively correspond to an existing control, and a part of the interactive functions do not correspond to a control. For example, for a movement function of a UI, movement control is not usually set, but a border of the UI is dragged to achieve the movement. After integrating the plurality of interactive functions of the app into the first comprehensive control, different functions may be triggered by different operations on the first comprehensive control. For example, by clicking the first comprehensive control, the UI of the app is minimized, that is, the UI of the app is hidden, and the app is closed by double-clicking the first comprehensive control. Alternatively, by operating the first comprehensive control, a new title bar is invoked, and the app is controlled through the title bar. The first comprehensive control may be understood as a first-level control of the app, and the title bar is understood as a second-level control of the app. The second-level control needs to be opened through the first-level control to implement control over the app.

This embodiment does not limit the specific form of the first comprehensive control. For example, the first comprehensive control is an arrow-style control, and the direction of an arrow may be downwards, upwards, leftwards, or rightwards. Alternatively, the first comprehensive control may further be a circular control, a spherical control, a horizontal bar control, or the like.

**In** addition, the location of the first comprehensive control is not limited in this embodiment, and the first comprehensive control may be located below or on the right side of the UI. Alternatively, a relative location of the first comprehensive control and the UI remains unchanged. For example, the relative location of the central location of the first comprehensive control and the central location of the UI remains unchanged. When the first comprehensive control moves, the UI also moves accordingly. After the movement, the relative location of the first comprehensive control and the UI remains unchanged. For another example, the coordinate points of the Z axis of the first comprehensive control and the UI in the virtual reality space satisfy a predetermined relationship, for example, the Z axis coordinate points of the two are the same, or the distance between the Z axis coordinate points of the two is fixed.

FIG. 2 is a schematic diagram of a UI and a first comprehensive control of an app. As shown in FIG. 2, the first comprehensive control is a downward arrow style of control. The first comprehensive control is located at a lower center of the UI, and the arrow is of an open style.

FIG. 3 is another schematic diagram of a UI and a first comprehensive control of an app. The difference between FIG. 3 and FIG. 2 lies in that the arrow is a solid arrow.

The use of the downward arrow style of control facilitates the user to understand the function of the first comprehensive control. In the prior art, the downward arrow style of control usually represents that the control also has a second-level menu or more functions.

**In** FIG. 2 and FIG. 3, the first comprehensive control is located at a lower center of the UI; therefore, the arrow points downwards, and when the first comprehensive control is located on the right side of the UI, the arrow points to the right side, that is, the direction of the arrow may change with the location of the first comprehensive control.

By integrating the plurality of interactive functions of an app into a control, the UI of the app is more concise, and the UI may not comprise the control, so that on the one hand, blocking a main interface of the UI is avoided, and on the other hand, "sense of immersion" of a user may be improved.

**In** addition, the method in this embodiment also facilitates user operation on a control of a UI. An extended reality space is typically a 3D space, and directly using an operation performed by a user on an app in a 2D space brings difficulty to some user operations. For example, for a closing operation on an app, in the prior art, a user needs to move a cursor to a closing control at a top left corner of a UI and then close the app. However, according to common user habits, the cursor is usually located in a lower area of the UI, and the cursor moves a great distance. According to the method of this embodiment, closing an app may be achieved by operating the first comprehensive control.

S102. In response to an operation on the first comprehensive control, the app is controlled to perform an interactive function corresponding to the operation.

**In** this embodiment, the user performs an operation on the first comprehensive control. The operation includes but is not limited to clicking, long pressing, dragging, double-clicking, and hover on the first comprehensive control.

**In** an XR device, a user may perform an operation on the first comprehensive control by means of a handheld device, a gesture operation, a voice manner, a gaze control manner, or the like, which is not limited in the present application.

**In** this embodiment, in response to an opening instruction for an application in an extended reality space, a UI of the application and a first comprehensive control of the application are displayed, wherein the first comprehensive control is located outside the UI, the first comprehensive control integrates a plurality of interactive functions of the application; and in response to an operation on the first comprehensive control, the application is controlled to perform an interactive function corresponding to the operation. By integrating a plurality of interactive functions of an application into a first comprehensive control outside a UI, the UI of the application becomes more concise, and it is also convenient for a user to operate a control of the UI, thereby enhancing the "sense of immersion" brought to the user by an XR device.

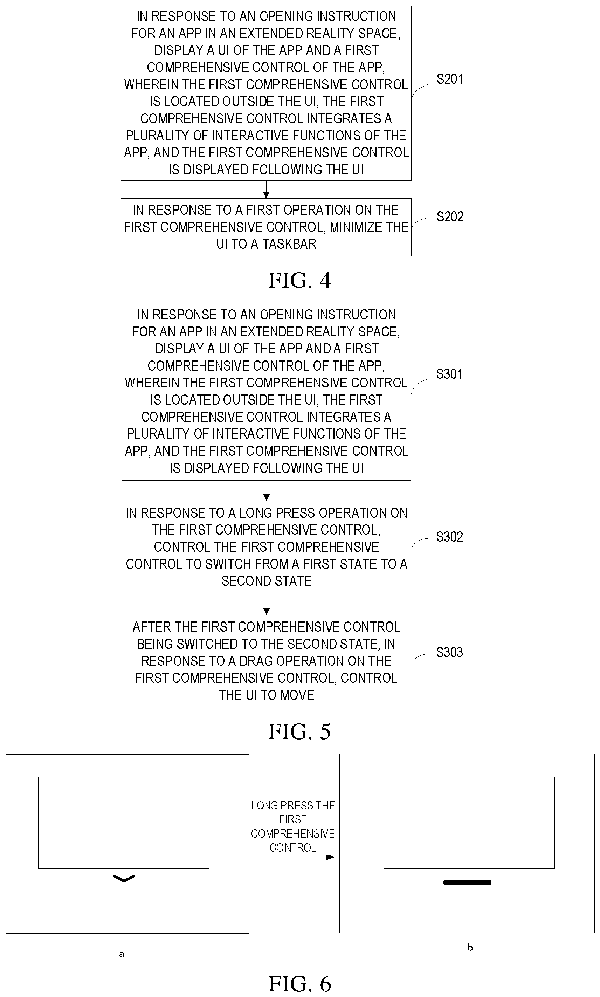

On the basis of Embodiment 1, Embodiment 2 of the present application provides a control method for an application in an extended reality space, which is used for hiding a UI of an app. FIG. 4 is a flowchart of a control method for an application in an extended reality space provided by Embodiment 2 of the present application. As shown in FIG. 4, the method provided in this embodiment includes the following steps.

S201. In response to an opening instruction for an app in an extended reality space, a UI of the app and a first comprehensive control of the app are displayed, wherein the first comprehensive control is located outside the UI, the first comprehensive control integrates a plurality of interactive functions of the app, and the first comprehensive control is displayed following the UI.

S202. In response to a first operation on the first comprehensive control, the UI is minimized to a taskbar.

**In** an extended reality space provided by a VR device, not only a UI of an app and a first comprehensive control are displayed, but also a taskbar is displayed. The taskbar refers to a shortcut window for task display and switching which can display and switch a running app; a program is started by clicking an icon of the app in the taskbar; and the UI is minimized to the taskbar by clicking a minimizing control of the app. The taskbar is similar to a taskbar in a Windows system, or a dock in an Apple system.

For example, the first operation is a click operation on the first comprehensive control, and a user minimizes a UI to a taskbar by clicking the first comprehensive control. After the UI is minimized to the taskbar, the icon of the app may be reopened by clicking on the icon of the app in the taskbar, and after the app is reopened, the UI and the first comprehensive control of the app are displayed on the screen.

**In** the prior art, a minimizing control of a UI of an app is generally located at an upper right corner of the app, and a cursor needs to be moved to the upper right corner of the app. There are many controls in the UI. During a movement process, a false trigger may happen, and a movement distance is far. In this embodiment, after the user clicks the first comprehensive control, the UI of the app is minimized to the taskbar, thereby facilitating user operation.

Alternatively, to improve interestingness, when a UI is minimized to a taskbar, a minimization process may be displayed through an animation, thereby bringing a better experience to the user.

**In** this embodiment, in response to an opening instruction for an app in an extended reality space, a UI of the app and a first comprehensive control of the app are displayed, wherein the first comprehensive control is located outside the UI, the first comprehensive control integrates a plurality of interactive functions of the app. In response to a first operation on the first comprehensive control, the UI is minimized to a taskbar. The first operation may be a click operation, and UI of an app can be minimized by clicking the first comprehensive control, which is convenient for users to operate.

On the basis of Embodiment 1, Embodiment 3 of the present application provides a control method for an application in an extended reality space. A UI is controlled to move in response to a second operation on a first comprehensive control. FIG. 5 is a flowchart of a control method for an application in an extended reality space provided by Embodiment 3 of the present application. As shown in FIG. 5, the method provided by this embodiment includes the following steps.

S301. In response to an opening instruction for an app in an extended reality space, a UI of the app and a first comprehensive control of the app are displayed, wherein the first comprehensive control is located outside the UI, the first comprehensive control integrates a plurality of interactive functions of the app, and the first comprehensive control is displayed following the UI.

S302. In response to a long press operation on the first comprehensive control, the first comprehensive control is controlled to switch from a first state to a second state.

The first state is a default state of the first comprehensive control, for example, the first state is a downward arrow style, and the second state is a horizontal bar style. FIG. 6 is a schematic diagram of a state change of a first comprehensive control of an app. As shown in FIG. 6, in a normal state, the first comprehensive control is a downward arrow style shown in FIG. 6(a), and after a user long presses the first comprehensive control, the first comprehensive control is changed into a horizontal bar style shown in FIG. 6(b). After the first comprehensive control is switched to the second state, the second state may be used to prompt the user that the first comprehensive control can be dragged.

S303. After the first comprehensive control being switched to the second state, in response to a drag operation on the first comprehensive control, the UI is controlled to move.

After the first comprehensive control is switched to the second state, a user may drag the first comprehensive control and control the movement of the UI by means of the movement of the first comprehensive control. Taking controlling a VR device through a handle as an example, when a user long presses a trigger key of the handle to trigger the first comprehensive control to switch from the first state to the second state. At this point, if the user continues to long press the trigger key to drag the first comprehensive control to move, the UI will move along with the movement of the first comprehensive control, that is, the first comprehensive control and the UI move together.

**In** an implementation, a moving distance, a moving direction and a moving speed of the UI and the first comprehensive control are all the same.

**In** another implementation, at least one of the moving distance, the moving direction, and the moving speed of the UI and the first comprehensive control is different. For example, the moving speed and the moving direction of the UI and the first comprehensive control are the same, but the moving distances of the two are different. The moving distance of the UI is greater than the moving distance of the first comprehensive control. For example, the moving distance of the UI is n times that of the first comprehensive control, where n is greater than 1.

Alternatively, in some embodiments of the present application, in response to a long press operation on a first comprehensive control, the state of the first comprehensive control does not change; and after the long press operation ends, when a user drags the first comprehensive control, the UI is controlled to move.

**In** other embodiments of the present disclosure, in response to a drag operation on the first comprehensive control, the UI is controlled to move.

**In** this embodiment, in response to a long press operation on the first comprehensive control, the first comprehensive control is controlled to switch from the first state to the second state, and after the first comprehensive control is switched to the second state, in response to a drag operation on the first comprehensive control, the UI is controlled to move. In the prior art, UI movement is typically realized by dragging a border of the UI. In the method of this embodiment, UI movement is controlled by performing a long press operation on the first comprehensive control and dragging the first comprehensive control. Compared with the UI, the first comprehensive control has a smaller area, making it relatively convenient to operate the UI.

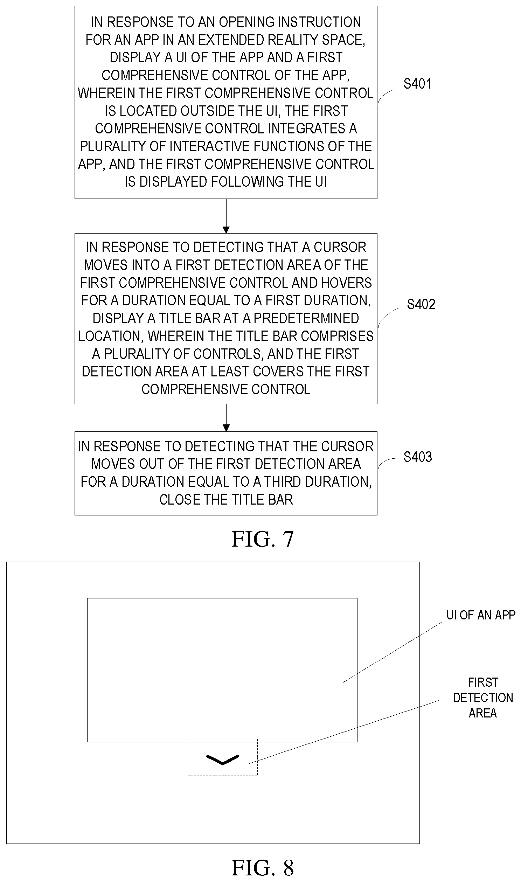

**On** the basis of Embodiment 1, Embodiment 4 of the present application provides a control method for an application in an extended reality space. A title bar is invoked through hovering over a first comprehensive control, and the application can be controlled through the title bar. FIG. 7 is a flowchart of a control method for an application in an extended reality space according to Embodiment 4 of the present application. As shown in FIG. 7, the method provided in this embodiment includes the following steps.

**S401.** In response to an opening instruction for an app in an extended reality space, a UI of the app and a first comprehensive control of the app are displayed, wherein the first comprehensive control is located outside the UI, the first comprehensive control integrates a plurality of interactive functions of the app, and the first comprehensive control is displayed following the UI.

**S402.** In response to detecting that a cursor moves into a first detection area of the first comprehensive control and hovers for a duration equal to a first duration, a title bar is displayed at a predetermined location, wherein the title bar comprises a plurality of controls, and the first detection area at least covers the first comprehensive control.

This step uses a hovering function of the VR device. Hovering generally refers to a state indicating that a cursor is suspended on a certain element. The hovering may be used for highlighting a prompt, an indication information floating frame, or a lower-level navigation, or the like. After hovering over some buttons, their states may change, usually by displaying a button frame or highlighting, to draw attention of users to this function and let them know that the cursor has entered the clickable area of the function. Especially for texts that do not have a strong sense of clickability, hovering can inform users that they are operable. This embodiment utilizes the hover function to invoke the title bar.

**In** a virtual reality space, a user cannot touch a 2D or 3D virtual object, and therefore, a ray interaction is introduced, where a ray may be emitted from the center of a user palm, or the ray may be emitted from a hand controller of an XR device, and the ray is considered as an extension of the hand. A ring cursor is connected to the end of a ray to indicate a location where the ray intersects with a target object, and the target object pointed by the ring cursor may receive an instruction.

**In** this embodiment, when a cursor is in the first detection area of the first comprehensive control and hovers for a duration equal to a first duration, a title bar is displayed at a predetermined location, and the size of the first detection area at least covers the location where the first comprehensive control is located. The shape of the first detection area may be a rectangular area, and may further be a circular area or other shapes. This embodiment does not limit this. FIG. 8 is a schematic diagram of a first detection area of a first comprehensive control. The first detection area shown in FIG. 8 is a rectangular area.

The title bar comprises a plurality of controls, and an app is interacted through a control in the title bar. The controls in the title bar may include but are not limited to a minimizing control, a closing control, a maximizing control, a help control, a screen projection control, a volume control, a fast forward control, or the like, and the controls in the title bar are associated with functions of the app.

The location of the title bar may be predetermined, and the predetermined location may be the periphery of the first comprehensive control, for example, the title bar is located above, below, or on the right side of the first comprehensive control. The location of the title bar is not limited in this embodiment.

**In** an implementation, in response to detecting that the cursor moves into the first detection area and hovers for a duration equal to a second duration, the first comprehensive control is controlled to switch from a first state to a second state. The second duration is less than the first duration. In response to the first comprehensive control being in the second state and detecting that the hovering duration is equal to the first duration, the title bar is displayed at a predetermined location.

After the first comprehensive control is switched from the first state to the second state, the second state may be used to prompt the user that hovering takes effect, and a function corresponding to hovering is about to be triggered. For example, the first state of the first comprehensive control is a downward arrow style, and the second state is a horizontal bar style.

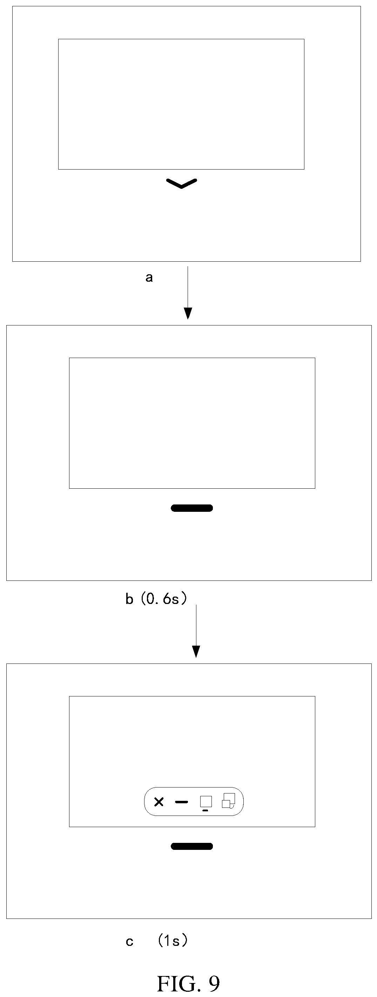

FIG. 9 is a schematic diagram of an interface transformation in which a title bar is invoked through a first comprehensive control. Assuming that the first duration is 1 second (s) and a second duration is 0.6s, when a cursor moves to a first detection area, a UI is as shown in FIG. 9(a), and the first comprehensive control is in a downward arrow style; when it is detected that a cursor moves into the first detection area and hovers for a duration equal to 0.6s, the first comprehensive control is controlled to switch from the downward arrow style to a horizontal bar style state, as shown in FIG. 9(b); and when a cursor is in the first detection area and hovers for a duration equal to 1s, a title bar is displayed above the first comprehensive control, as shown in FIG. 9(c).

The title bar shown in FIG. 9(c) includes four controls which are a minimizing control, a closing control, a maximizing control, and a screen projection control from left to right.

In another implementation, in response to detecting that a cursor moves into a first detection area and hovers for a duration equal to a first duration, the title bar is displayed at a predetermined location. In this way, the state of the first comprehensive control will not change.

Alternatively, in some embodiments, after the title bar is displayed at the predetermined location, the first comprehensive control is hidden.

**S403.** In response to detecting that the cursor moves out of the first detection area for a duration equal to a third duration, the title bar is closed.

**If** the first comprehensive control switches from the first state to the second state when the title bar is invoked, the first comprehensive control switches from the second state to the first state when the title bar is closed.

**In** this embodiment, to avoid a misoperation by the user, a third duration is set, and the title bar is closed only when a duration for the cursor to move out of the first detection area reaches the third duration. If it is detected that a cursor moves out of the first detection area for a duration shorter than the third duration, the title bar will not be closed. For example, if it is detected that a cursor moves out of the first detection area and moves into the first detection area again within the third duration, the title bar is not closed.

There is no necessary relationship between the length of the first duration and the third duration, and the first duration and the third duration may be the same or different.

Alternatively, in some embodiments of the present application, in response to detecting that the cursor moves out of the second detection area for a duration equal to the third duration, the title bar is closed. The second detection area covers at least the first comprehensive control and the title bar. At this point, the title bar is located in proximity to the first comprehensive control, for example, the title bar is located above the first comprehensive control and is adjacent to the first comprehensive control.

Correspondingly, if it is detected that the cursor moves out of the second detection area and moves into the second detection area again within the third duration, the title bar is not closed.

**In** this embodiment, in response to detecting that a cursor moves into a first detection area of the first comprehensive control and hovers for a duration equal to a first duration, a title bar is displayed at a predetermined location, wherein the title bar comprises a plurality of controls, and the first detection area at least covers the first comprehensive control. In response to detecting that the cursor moves out of the first detection area for a duration equal to a third duration, the title bar is closed. By performing a hover operation on the first comprehensive control, a title bar of the application is invoked, the application may be controlled through the title bar, and after the completion of the control, the title bar may be closed.

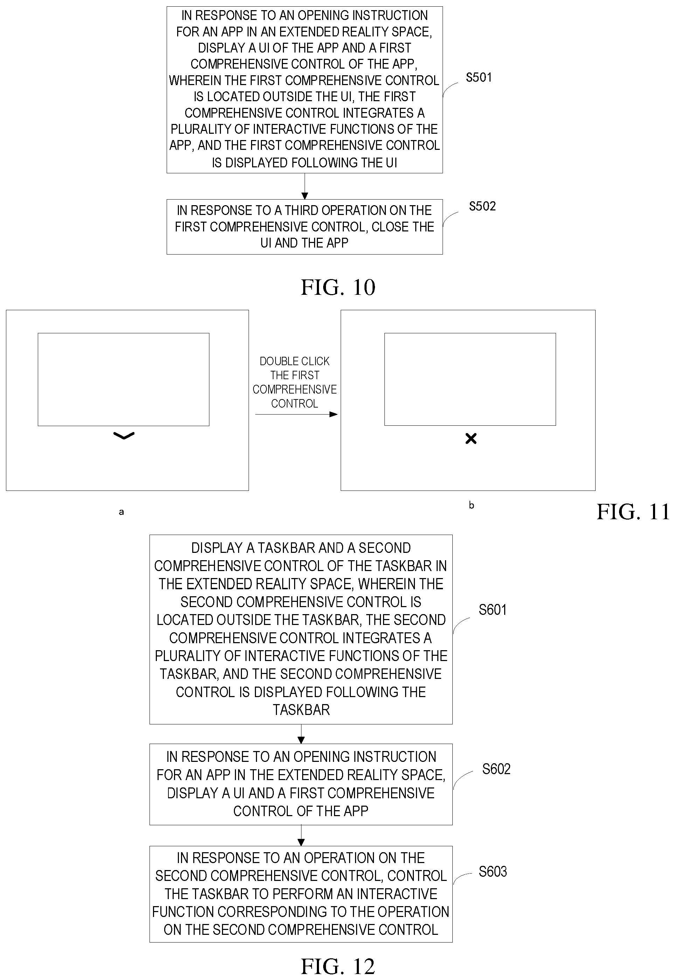

**On** the basis of Embodiment 1, Embodiment 5 of the present application provides a control method for an application in an extended reality space, which is configured to close an application. FIG. 10 is a flowchart of a control method for an application in an extended reality space according to Embodiment 5 of the present application. As shown in FIG. 10, the method provided in this embodiment includes the following steps.

**S501.** In response to an opening instruction for an app in an extended reality space, a UI of the app and a first comprehensive control of the app are displayed, wherein the first comprehensive control is located outside the UI, the first comprehensive control integrates a plurality of interactive functions of the app, and the first comprehensive control is displayed following the UI.

S502. In response to a third operation on the first comprehensive control, the UI and the application are closed.

Alternatively, the third operation is a double-click operation, and the application can be closed by double-clicking the first comprehensive control.

**In** an alternative implementation, in response to the third operation on the first comprehensive control, the first comprehensive control is controlled to switch from a first state to a third state. The third state is configured to indicate that the app is about to be closed. In response to a duration for which the first comprehensive control is in the third state reaching a fourth duration, the UI and the app are closed.

For example, the first state is a downward arrow style, and the third state is a cross style. FIG. 11 is a schematic diagram of an interface transformation in which an app is closed through a first comprehensive control. FIG. 11(a) is a state of a first comprehensive control when an app runs normally. When a user double-clicks the first comprehensive control, an interface transformation in an extended reality space is shown in FIG. 11(b). Then, after a fourth duration is maintained, the app is closed.

Alternatively, to improve interestingness, when an app is closed, a closing process may be displayed through an animation to bring better experience to users.

**In** this embodiment, in response to an opening instruction for an app in an extended reality space, a UI of the app and a first comprehensive control of the app are displayed, wherein the first comprehensive control is located outside the UI, the first comprehensive control integrates a plurality of interactive functions of the app. In response to a third operation on the first comprehensive control, the UI and the application are closed. Closing the app can be quickly and conveniently realized by means of the third operation.

Embodiment 6 of the present application provides a control method for an application in an extended reality space, which is configured to control a taskbar. FIG. 12 is a flowchart of a control method for an application in an extended reality space according to Embodiment 6 of the present application. As shown in FIG. 12, the method provided in this embodiment includes the following steps.

S601. A taskbar and a second comprehensive control of the taskbar are displayed in the extended reality space. The second comprehensive control is located outside the taskbar. The second comprehensive control integrates a plurality of interactive functions of the taskbar, and the second comprehensive control is displayed following the taskbar.

A taskbar is an application or function carried by an XR device. After the XR device is started, the taskbar is displayed by default, and the taskbar is usually located at the bottom of a screen.

The second comprehensive control is configured to operate the taskbar, and the second comprehensive control integrates a plurality of interactive functions of the taskbar. The interactive operations comprise but are not limited to, hiding (also can be understood as closing), moving, and invoking the taskbar.

**The** second comprehensive control is displayed following the taskbar, that is, the second comprehensive control is not separately displayed. The second comprehensive control is different from some virtual objects in the extended reality space and can be independently displayed and operated. The second comprehensive control is displayed only when the taskbar is displayed, and when the taskbar is hidden, the first comprehensive control is not displayed.

This embodiment does not limit the specific form of the second comprehensive control. For example, the second comprehensive control is an arrow style of control, and the direction of an arrow may be downwards, upwards, leftwards, or rightwards. Alternatively, the second comprehensive control may further be a circular control, a spherical control, or a horizontal bar control.

**In** addition, the location of the second comprehensive control is not limited in this embodiment, and the second comprehensive control may be located below or on the right side of the taskbar. A relative location of the second comprehensive control and the taskbar remains unchanged. For example, the relative location of the central location of the second comprehensive control and the central location of the taskbar remains unchanged. When the second comprehensive control moves, the taskbar also moves accordingly. After the movement, the relative location of the two remains unchanged. For another example, the Z-axis coordinate points of the second comprehensive control and the taskbar in the virtual reality space satisfy a predetermined relationship. For example, the Z-axis coordinate points of the two are the same, or the distance between the Z-axis coordinate points of the two is fixed.

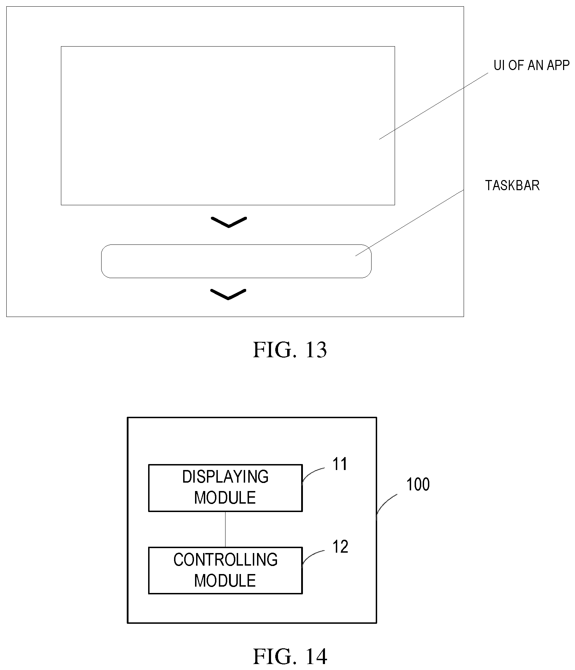

The shapes of the second comprehensive control and the first comprehensive control may be the same or may be different. FIG. 13 is a schematic diagram of simultaneous display of an app and a taskbar. As shown in FIG. 13, the shapes of the first comprehensive control and the second comprehensive control are the same, both being a downward arrow style, but the functions of the two are different.

**It** should be noted that the second comprehensive control is different from a traditional control panel. The first comprehensive control has only one operable point, and the function of the second comprehensive control is similar to that of the first comprehensive control. For related description, reference is made to the first comprehensive control, and details are not described herein again.

**S602.** In response to an opening instruction for an app in the extended reality space, a UI and a first comprehensive control of the app are displayed.

**S603.** In response to an operation on the second comprehensive control, the taskbar is controlled to perform an interactive function corresponding to the operation on the second comprehensive control.

**It** can be understood that step S602 and step S603 are performed in no sequence, and are changed according to a sequence triggered by the user.

**In** an interactive manner, in response to a fourth operation on the second comprehensive control, the taskbar is hidden. For example, the fourth operation is a click operation, a double-click operation, or a hover operation on the second comprehensive control.

When hiding a taskbar through a hover operation, in response to detecting that a cursor moves into a third detection area of the second comprehensive control and hovers for a duration equal to a fifth duration, the taskbar is hidden. The third detection area covers at least the second comprehensive control.

The third detection area may be rectangular or in other shapes, and the size of the third detection area covers at least the second comprehensive control.

Alternatively, when it is detected that the cursor moves to the third detection area for a duration equal to a sixth duration, the second comprehensive control is controlled to switch from the first state to the second state; and when it is detected that the cursor hovers for a duration equal to a fifth duration, the taskbar is hidden. The sixth duration is less than the fifth duration, and the second state is configured to prompt a user that the hovering function takes effect. For example, the first state of the second comprehensive control is a downward arrow, and the second state is a horizontal bar style.

**In** another interaction manner, in response to a fifth operation on the second comprehensive control, the taskbar is controlled to move. For example, the fifth operation may be a drag operation on the second comprehensive control, and when the second comprehensive control is dragged, the taskbar moves along with the second comprehensive control.

Alternatively, in response to a long press operation on the second comprehensive control, the second comprehensive control is controlled to switch from a first state to a second state. After the second comprehensive control is switched to the second state, in response to a drag operation on the second comprehensive control or the taskbar, the taskbar is controlled to move.

**In** this interactive manner, the movement of the taskbar and the UI movement of the app are independent.

**In** another interactive manner, in response to a fifth operation on the second comprehensive control, the taskbar is controlled to move together with the UI of the app running in the foreground. For example, the fifth operation may be a drag operation on the second comprehensive control, and when the second comprehensive control is dragged, the taskbar and the UI of the app running in the foreground move together with the second comprehensive control.

Alternatively, in response to a long press operation on the second comprehensive control, the second comprehensive control is controlled to switch from a first state to a second state. After the second comprehensive control is switched to the second state, in response to a drag operation on the second comprehensive control or the taskbar, the taskbar is controlled to move together with the UI of the app running in the foreground.

**In** the interactive mode, the drag operation on the second comprehensive control is a higher-level control operation than the drag operation on the first comprehensive control. By means of the drag operation on the second comprehensive control, the taskbar and the UI of the app can be moved together.

**It** can be understood that, in this interactive manner, if the second comprehensive control is dragged, there is no foreground running app in the extended reality space, that is, there is no opened app or opened apps are all minimized to the taskbar and run in the background, then when the second comprehensive control is dragged, only the taskbar is moved. If there is an app running in the foreground in the extended reality space when the second comprehensive control is dragged, the taskbar moves together with the UI of the app running in the foreground.

The implementation principle of the movement operation of the taskbar and the implementation principle of the movement together of the taskbar and the UI of the app are similar to the implementation principle of the movement operation of the UI of the app in the foregoing embodiment and are not further described herein.

**In** this embodiment, a taskbar and a second comprehensive control of the taskbar are displayed in the extended reality space. The second comprehensive control is located outside the taskbar. The second comprehensive control integrates a plurality of interactive functions of the taskbar. In response to an operation on the second comprehensive control, the taskbar is controlled to perform an interactive function corresponding to the operation on the second comprehensive control, which is convenient for a user to operate the taskbar.

**During** an interaction process with an app, zooming out and zooming in a UI of an app is a common interactive function, and a user may zoom in and zoom out a UI of an app by using a handle of an XR device when a first comprehensive control is in any state. Alternatively, after a user performs long-pressing on the first comprehensive control and controls the first comprehensive control to switch from the first state to the second state, the UI of the app is zoomed in and zoom out through the handle. It will be appreciated that a user may further control the UI of the app to zoom in or zoom out in other ways, such as through voice or gesture.

**In** order to better implement the control method for an application in an extended reality space according to the embodiments of the present application, the embodiments of the present application further provide a control apparatus for an application in an extended reality space. FIG. 14 is a schematic structural diagram of a control apparatus for an application in an extended reality space according to Embodiment 7 of the present application. As shown in FIG. 14, the control apparatus for an application in an extended reality space 100 may comprise:
a displaying module 11 configured to, in response to an opening instruction for an application in an extended reality space, display a user interface (UI) of the application and a first comprehensive control of the application, wherein the first comprehensive control is located outside the UI, the first comprehensive control integrates a plurality of interactive functions of the application, and the first comprehensive control is displayed following the UI; and
a controlling module 12 configured to, in response to an operation on the first comprehensive control, control the application to perform an interactive function corresponding to the operation.

**In** some embodiments, the controlling module 12 is specifically configured to:
in response to a first operation on the first comprehensive control, minimize the UI to a taskbar.

**In** some embodiments, the first operation is a click operation on the first comprehensive control.

**In** some embodiments, the controlling module 12 is specifically configured to:
in response to a second operation on the first comprehensive control, control the UI to move.

**In** some embodiments, the controlling module 12 is specifically configured to:
in response to a long press operation on the first comprehensive control, control the first comprehensive control to switch from a first state to a second state; and
after the first comprehensive control being switched to the second state, in response to a drag operation on the first comprehensive control, control the UI to move.

**In** some embodiments, the second operation is a drag operation on the first comprehensive control.

**In** some embodiments, the controlling module 12 is specifically configured to:
in response to detecting that a cursor moves into a first detection area of the first comprehensive control and hovers for a duration equal to a first duration, display a title bar at a predetermined location, wherein the title bar comprises a plurality of controls, and the first detection area at least covers the first comprehensive control.

**In** some embodiments, the controlling module 12 is specifically configured to:
in response to detecting that the cursor moves into the first detection area and hovers for a duration equal to a second duration, control the first comprehensive control to switch from a first state to a second state, the second duration being less than the first duration; and
in response to the first comprehensive control being in the second state and detecting that the hovering duration is equal to the first duration, display the title bar at a predetermined location.

**In** some embodiments, the controlling module 12 is further configured to:
in response to detecting that the cursor moves out of the first detection area for a duration equal to a third duration, close the title bar.

**In** some embodiments, the title bar is located in proximity to the first comprehensive control; the controlling module 12 is further configured to:
in response to detecting that the cursor moves out of the second detection area for a duration equal to the third duration, close the title bar, wherein the second detection area covers at least the first comprehensive control and the title bar.

**In** some embodiments, the first state is a downward arrow style and the second state is a horizontal bar style.

**In** some embodiments, the controlling module 12 is specifically configured to:
in response to a third operation on the first comprehensive control, close the UI and the application.

**In** some embodiments, the controlling module 12 is specifically configured to:
in response to the third operation on the first comprehensive control, control the first comprehensive control to switch from a first state to a third state, the third state being configured to indicate that the application is about to be closed; and
in response to a duration for which the first comprehensive control is in the third state reaching a fourth duration, close the UI and the application.

**In** some embodiments, the third operation is a double-click operation.

**In** some embodiments, the first state is a downward arrow style and the third state is a cross style.

**In** some embodiments, the first comprehensive control is a downward arrow style of control.

**In** some embodiments, the UI does not comprise a control, and the first comprehensive control integrates a function of an existing control of the application.

**In** some embodiments, a taskbar and a second comprehensive control of the taskbar are further displayed in the extended reality space, the second comprehensive control is located outside the taskbar, the second comprehensive control integrates a plurality of interactive functions of the taskbar, and the second comprehensive control is displayed following the taskbar; the controlling module 12 is further configured to:
in response to an operation on the second comprehensive control, control the taskbar to perform an interactive function corresponding to the operation on the second comprehensive control.

**In** some embodiments, the controlling module 12 is specifically configured to:
in response to a fourth operation on the second comprehensive control, hide the taskbar.

**In** some embodiments, the fourth operation is a click operation or a double-click operation on the second comprehensive control.

**In** some embodiments, the controlling module 12 is specifically configured to:
in response to detecting that a cursor moves into a third detection area of the second comprehensive control and hovers for a duration equal to a fifth duration, hide the taskbar, wherein the third detection area covers at least the second comprehensive control.

**In** some embodiments, the controlling module 12 is specifically configured to:
in response to a fifth operation on the second comprehensive control, control the taskbar to move, or controlling the taskbar to move together with the UI of the application running in the foreground.

**In** some embodiments, the controlling module 12 is specifically configured to:
in response to a long press operation on the second comprehensive control, control the second comprehensive control to switch from a first state to a second state; and
after the second comprehensive control being switched to the second state, in response to a drag operation on the second comprehensive control, control the taskbar to move, or control the taskbar to move together with the UI of the application running in the foreground.

**In** some embodiments, the second comprehensive control is a downward arrow style of control.

**In** some embodiments, the first state of the second comprehensive control is a downward arrow style, and the second state of the second comprehensive control is a horizontal bar style.

**In** some embodiments, a relative location of the first comprehensive control and the UI remains unchanged.

**In** some embodiments, a relative location of the second comprehensive control and the taskbar remains unchanged.

**It** should be understood that the apparatus embodiments and the method embodiments may correspond to each other, and for similar descriptions, reference may be made to the method embodiment. To avoid repetition, no further description will be given here.

The apparatus 100 of the embodiments of the present application has been described above from the perspective of functional modules in combination with the drawings. It should be understood that the functional modules may be implemented in the form of hardware, in the form of software instructions, or in the form of a combination of hardware and software modules. Specifically, respective steps of the method embodiments in the embodiments of the present application may be completed by means of an integrated logic circuit of hardware in a processor and/or an instruction in the form of software. Steps in combination with the methods disclosed in the embodiments of the present application may be directly embodied as being completed by a hardware decoding processor, or may be completed by using a combination of hardware and software modules in a decoding processor. Alternatively, the software module may be located in a mature storage medium in the field, such as a random access memory, a flash memory, a read-only memory, a programmable read-only memory, an electrically erasable programmable memory, and a register. The storage medium is located in a memory, and the processor reads information in the memory and completes the steps in the described method embodiments in combination with hardware thereof.

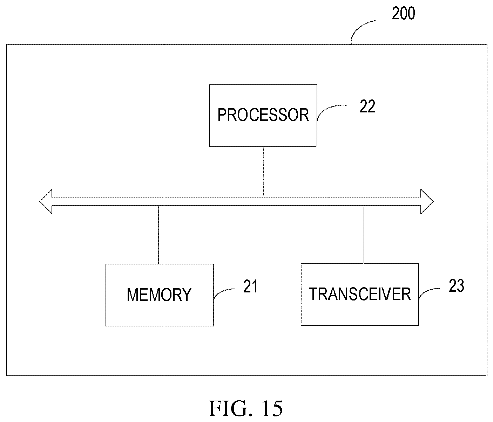

**An** embodiment of the present application further provides an electronic device. FIG. 15 is a schematic structural diagram of an electronic device according to Embodiment 8 of the present application. As shown in FIG. 15, the electronic device 200 may comprise:
a memory 21 and a processor 22, the memory 21 being configured to store a computer program, and the program code being transmitted to the processor 22. In other words, the processor 22 may invoke and operate the computer program from the memory 21 to perform the method in the embodiments of the present application.

For example, the processor 22 may be configured to perform the foregoing method embodiments according to an instruction in the computer program.

**In** some embodiments of the present application, the processor 22 may comprise, but is not limited to:
a general-purpose processor, a digital signal processor (DSP), an application specific integrated circuit (ASIC), a field programmable gate array (FPGA) or other programmable logic device, a discrete gate or transistor logic device, a discrete hardware component, or the like.

**In** some embodiments of the present application, the memory 21 comprises, but is not limited to:
a volatile memory and/or a non-volatile memory, wherein the non-volatile memory may be a Read-Only Memory (ROM), a Programmable POM (PROM), an Erasable PROM (EPROM), an Electrically EPROM (EEPROM), or a flash memory. The volatile memory may be a Random Access Memory (RAM), which serves as an external cache. By way of example and not limitation, many forms of RAM are applicable, such as a Static RAM (SRAM), a Dynamic RAM (DRAM), a Synchronous DRAM (SDRAM), and a Double Data Rate SDRAM (DDR SDRAM), Enhanced SDRAM (ESDRAM), synch link DRAM (SLDRAM) and Direct Rambus RAM (DR RAM).

**In** some embodiments of the present disclosure, the computer program may be divided into one or more modules, and the one or more modules are stored in the memory 21 and performed by the processor 22 to implement the method provided in the present disclosure. The one or more modules may be a series of computer program instruction segments capable of performing a particular function, and the instruction segment is configured to describe an execution of the computer program in an electronic device.

As shown in FIG. 15, the electronic device may further include a transceiver 23, which may be connected to the processor 22 or the memory 21.

The processor 22 may control the transceiver 23 to communicate with other devices, specifically, may send information or data to other devices, or receive information or data sent by other devices. The transceiver 23 may include a transmitter and a receiver. The transceiver 23 may further include an antenna, and the number of antennas may be one or more.

**It** can be understood that, although not shown in FIG. 15, the electronic device 200 may further include a camera module, a wireless fidelity WIFI module, a positioning module, a Bluetooth module, a display, a controller, and the like, which are not described herein again.

**It** should be understood that various components in the electronic device are connected via a bus system, wherein the bus system comprises a power bus, a control bus, and a state signal bus in addition to a data bus.

The present application also provides a computer storage medium, and a computer program is stored thereon. The computer program, when executed by a computer, causes the computer to perform the method of the described method embodiment. Alternatively, the embodiments of the present application further provide a computer program product comprising an instruction which, when executed by a computer, causes the computer to perform the method of the described method embodiment.

The present application also provides a computer program product, which comprises a computer program. The computer program is stored in a computer-readable storage medium. A processor of an electronic device reads the computer program from a computer-readable storage medium, and the processor executes the computer program so that the electronic device performs a corresponding procedure in the control method for a location of a user in a virtual scenario in the embodiments of the present application. For brevity, details are not described herein again.

**In** the several embodiments provided in the present application, it should be understood that the disclosed system, apparatus, and method may be implemented in other manners. For example, the apparatus embodiments described above are merely exemplary. For example, the division of the module is merely logical function division, and there may be other divisions in actual implementation. For example, a plurality of modules or components may be combined or may be integrated into another system, or some features may be ignored or not executed. In addition, the displayed or discussed mutual couplings or direct couplings or communication connections may be implemented through some interfaces. The indirect coupling or communication connection between the apparatuses or modules may be implemented in electronic, mechanical, or other forms.

The modules described as separate parts may or may not be physically separate, and parts displayed as modules may or may not be physical modules, may be located in one location, or may be distributed on a plurality of network elements. A part or all of the modules may be selected according to actual needs to achieve the objectives of the solutions of the embodiments. For example, respective function modules in respective embodiments of the present application may be integrated into a processing module, respective modules may exist alone physically, or two or more modules may be integrated into one module.

The foregoing descriptions are merely specific embodiments of the present application, but are not intended to limit the scope of protection of the present application. Any variation or replacement readily figured out by a person skilled in the art within the technical scope disclosed in the present application shall belong to the scope of protection of the present application. Therefore, the scope of protection of the present application should be subject to the scope of protection of this claim.

## Claims

1. A control method for an application in an extended reality space, comprising:
in response to an opening instruction for an application in an extended reality space, displaying a user interface (UI) of the application and a first comprehensive control of the application, wherein the first comprehensive control is located outside the UI, the first comprehensive control integrates a plurality of interactive functions of the application, and the first comprehensive control is displayed following the UI; and
in response to an operation on the first comprehensive control, controlling the application to perform an interactive function corresponding to the operation.

2. The method of claim 1, wherein in response to the operation on the first comprehensive control, controlling the application to perform the interactive function corresponding to the operation comprises:
in response to a first operation on the first comprehensive control, minimizing the UI to a taskbar.

3. The method of claim 2, wherein the first operation is a click operation on the first comprehensive control.

4. The method of claim 1, wherein in response to the operation on the first comprehensive control, controlling the application to perform the interactive function corresponding to the operation comprises:
in response to a second operation on the first comprehensive control, controlling the UI to move.

5. The method of claim 4, wherein in response to the second operation on the first comprehensive control, controlling the UI to move comprises:
in response to a long press operation on the first comprehensive control, controlling the first comprehensive control to switch from a first state to a second state; and
after the first comprehensive control being switched to the second state, in response to a drag operation on the first comprehensive control, controlling the UI to move.

6. The method of claim 4, wherein the second operation is a drag operation on the first comprehensive control.

7. The method of claim 1, wherein in response to the operation on the first comprehensive control, controlling the application to perform the interactive function corresponding to the operation comprises:
in response to detecting that a cursor moves into a first detection area of the first comprehensive control and hovers for a duration equal to a first duration, displaying a title bar at a predetermined location, wherein the title bar comprises a plurality of controls, and the first detection area at least covers the first comprehensive control.

8. The method of claim 7, wherein in response to detecting that the cursor moves into the first detection area of the first comprehensive control and hovers for the duration equal to the first duration, displaying the title bar at the predetermined location comprises:
in response to detecting that the cursor moves into the first detection area and hovers for a duration equal to a second duration, controlling the first comprehensive control to switch from a first state to a second state, the second duration being less than the first duration; and
in response to the first comprehensive control being in the second state and detecting that the hovering duration is equal to the first duration, displaying the title bar at a predetermined location.

9. The method of claim 7 or 8, further comprising:
in response to detecting that the cursor moves out of the first detection area for a duration equal to a third duration, closing the title bar.

10. The method of claim 8, wherein the title bar is located in proximity to the first comprehensive control and the method further comprises:
in response to detecting that the cursor moves out of the second detection area for a duration equal to the third duration, closing the title bar, wherein the second detection area covers at least the first comprehensive control and the title bar.

11. The method of claim 5 or 8, wherein the first state is a downward arrow style and the second state is a horizontal bar style.

12. The method of claim 1, wherein in response to the operation on the first comprehensive control, controlling the application to perform the interactive function corresponding to the operation comprises:
in response to a third operation on the first comprehensive control, closing the UI and the application.

13. The method of claim 12, wherein in response to the third operation on the first comprehensive control, closing the UI and the application comprises:
in response to the third operation on the first comprehensive control, controlling the first comprehensive control to switch from a first state to a third state, the third state being configured to indicate that the application is about to be closed; and
in response to a duration for which the first comprehensive control is in the third state reaching a fourth duration, closing the UI and the application.

14. The method of claim 12 or 13, wherein the third operation is a double-click operation.

15. The method of claim 13, wherein the first state is a downward arrow style and the third state is a cross style.

16. The method of any of claims 1-5, 7, and 12, wherein the first comprehensive control is a downward arrow style of control.

17. The method of any of claims 1-5, 7, and 12, wherein the UI does not comprise a control, and the first comprehensive control integrates a function of an existing control of the application.

18. The method of any of claims 1-5, 7, and 12, wherein a taskbar and a second comprehensive control of the taskbar are further displayed in the extended reality space, the second comprehensive control is located outside the taskbar, the second comprehensive control integrates a plurality of interactive functions of the taskbar, and the second comprehensive control is displayed following the taskbar, and wherein the method further comprises:
in response to an operation on the second comprehensive control, controlling the taskbar to perform an interactive function corresponding to the operation on the second comprehensive control.

19. The method of claim 18, wherein in response to the operation on the second comprehensive control, controlling the taskbar to perform the interactive function corresponding to the operation on the second comprehensive control comprises:
in response to a fourth operation on the second comprehensive control, hiding the taskbar.

20. The method of claim 19, wherein the fourth operation is a click operation or a double-click operation on the second comprehensive control.

21. The method of claim 19, wherein in response to the fourth operation on the second comprehensive control, hiding the taskbar comprises:
in response to detecting that a cursor moves into a third detection area of the second comprehensive control and hovers for a duration equal to a fifth duration, hiding the taskbar, wherein the third detection area covers at least the second comprehensive control.

22. The method of claim 18, wherein in response to the operation on the second comprehensive control, controlling the taskbar to perform the interactive function corresponding to the operation on the second comprehensive control comprises:
in response to a fifth operation on the second comprehensive control, controlling the taskbar to move, or controlling the taskbar to move together with the UI of the application running in the foreground.

23. The method of claim 22, wherein in response to the fifth operation on the second comprehensive control, controlling the taskbar to move, or controlling the taskbar to move together with the UI of the application running in the foreground comprises:
in response to a long press operation on the second comprehensive control, controlling the second comprehensive control to switch from a first state to a second state; and
after the second comprehensive control being switched to the second state, in response to a drag operation on the second comprehensive control, controlling the taskbar to move, or controlling the taskbar to move together with the UI of the application running in the foreground.

24. The method of claim 18, wherein the second comprehensive control is a downward arrow style of control.

25. The method of claim 23, wherein the first state of the second comprehensive control is a downward arrow style, and the second state of the second comprehensive control is a horizontal bar style.

26. The method of any of claims 1-5, 7, and 12, wherein a relative location of the first comprehensive control and the UI remains unchanged.

27. The method of claim 18, wherein a relative location of the second comprehensive control and the taskbar remains unchanged.

28. A control apparatus for an application in an extended reality space, comprising:
a displaying module configured to, in response to an opening instruction for an application in an extended reality space, display a user interface (UI) of the application and a first comprehensive control of the application, wherein the first comprehensive control is located outside the UI, the first comprehensive control integrates a plurality of interactive functions of the application, and the first comprehensive control is displayed following the UI; and
a controlling module configured to, in response to an operation on the first comprehensive control, control the application to perform an interactive function corresponding to the operation.

29. An electronic device, comprising:
a processor and a memory, the memory being configured to store a computer program, and the processor being configured to invoke and operate the computer program stored in the memory to perform the method of any of claims 1 to 27.

30. A computer-readable storage medium, configured to store a computer program, the computer program causing a computer to perform the method of any of claims 1 to 27.

31. A computer program product, comprising a computer program which, when executed by a processor, performs the method of any of claims 1 to 27.
